# EUROPEAN PATENT SPECIFICATION

(11) **EP 3 489 750 B1**
(45) Date of publication and mention of the grant of the patent: **17.01.2024**
(21) Application number: 17203609.7
(22) Date of filing: 24.11.2017
(51) Int. Cl.: G03B 17/02, G03B 17/12, H04N 23/51, G03B 30/00

(54) **A CAMERA MODULE FOR A MOTOR VEHICLE**
KAMERAMODUL FÜR EIN KRAFTFAHRZEUG
MODULE DE CAMÉRA POUR VÉHICULE À MOTEUR

(43) Date of publication of application: 29.05.2019
(73) Proprietor: Veoneer Sweden AB, 447 83 Vårgårda (SE)
(72) Inventor: GRAAN, Hans, 59172 Motala (SE)
(74) Representative: Müller Verweyen

(56) References cited:
- WO-A1-2008/061025
- WO-A1-2012/139024
- JP-A- S5 910 078
- US-A1- 2007 279 518
- US-A1- 2009 195 897
- US-A1- 2010 165 103
- US-A1- 2012 243 846

## Description

The invention relates to a camera module for a motor vehicle, comprising a camera housing, a lens objective comprises an opening allowing light to enter the camera module, and one or more electronic components including an image sensor adapted to sense light which is transmitted through the lens objective towards the image sensor.

Typically, a metal camera housing and a metal lens objective are used for a vehicle-mounted camera system. The metal housing and lens objective are conductive. The conductive housing and lens objective protect the sensor from interfering with external electromagnetic waves.

To reduce cost and weight, a plastic lens objective and a plastic housing is suggested. Such a camera housing is known for example from DE 10 2015 205 436 A1. However, a problem is that the plastic lens objective does not block electromagnetic waves to pass and reach the sensor. This means that the image sensor gets electrically exposed to the surrounding and other electrical devices nearby.

Additionally, the camera sensor emits electromagnetic waves and these can potentially disturb radio antennas and other electronic devices positioned in the camera module, adjacent the camera, and/or in windscreen approximately 10 cm to 20 cm apart from the sensor.

This means that such a plastic housing and lens objective cannot get electromagnetic compatibility (EMC) approval.

Positioning the sensor further into the housing would not solve the problem since there is no space available in the housing and the emitted radiation could widely spread.

WO 2012/139024 A1 discloses an electromagnetically shielded optical imaging system.

US 2010/0165103 A1 discloses a camera monitoring system for monitoring the drying of greenware in an electromagnetic dryer applicator.

US 2012/0243846 A1 discloses a security system configured to be protected from electromagnetic events.

WO 2008/061025 A1 discloses an integrated lens barrel for a miniature camera.

US 2007/0279518 discloses an optical module for an application in a motor vehicle.

JP S59 10078 A discloses a lens barrel for a television camera.

US 2009/195897 A1 discloses a camera module according to the preamble of claim 1.

The problem underlying the present invention is to provide a camera module that is cost-effective and ensures electromagnetic compatibility approval.

The invention solves this objective with the features of the independent claim.

According to the invention, an electromagnetic waveguide filter is arranged around at least a portion of the lens objective, wherein the electromagnetic waveguide filter is adapted to electromagnetically shield the one or more electronic components from undesired electromagnetic radiation entering the camera housing and/or to shield the camera surrounding from undesired electromagnetic radiation leaving the camera housing.

The invention has realized that an electromagnetic waveguide filter leads to an effective electromagnetic interference (EMI) protection. The camera module according to the invention provides electromagnetic immunity and blocks the external electric magnetic waves from reaching the one or more electronic components. The emission of electromagnetic radiation by the one or more electronic components is suppressed by the lens objective in combination with an electromagnetic waveguide filter. The electromagnetic waveguide filter ensures electromagnetic shielding and allows the use of a cost-effective non-shielding material for the barrel of the lens objective, namely plastics. The wave guide filter is used to shield the image sensor from interference with electronic devices in the surrounding of the camera module and/or to shield electronic components in the surrounding of the camera module from interference with the camera module.

The image sensor is adapted to convert light containing image information incident on a sensitive surface of the image sensor into an electrical signal containing said image information. The image sensor can for example be sensitive in the visible spectrum of electromagnetic radiation, i.e. in a wave length range approximately between 380 nm and 780 nm. Other frequency bands, in particular optical radiation (wave length approximately 1 nm to 1 mm) of the electromagnetic spectrum could be sensed by the image sensor. Optical radiation comprises infra-red (IR, wave length approximately 780 nm to 1 mm) and/or ultra-violet (UV, wave length approximately 1 nm to 380 nm). Depending on the application, also other frequency bands could be sensed by the image sensor. However, micro waves, radio waves, and/or long-radio waves with a wave length larger 1 mm (and frequency smaller 30 GHz and in particular smaller than 10 GHz) are typically not desired to be sensed by the image sensor but can potentially disturb its function. Therefore, micro waves, radio waves, and/or long-radio waves with a frequency smaller than 10 GHz may be considered to be undesired electromagnetic waves.

In other words, the electromagnetic waveguide filter is adapted to let only desired electromagnetic radiation, comprising the image information, entering the camera housing while shielding the surrounding from undesired radiation or noise radiation. Desired electromagnetic radiation is the radiation to be sensed by the image sensor, e.g., typically optical radiation, preferably visible light.

The electromagnetic waveguide filter is tube-shaped to match the typical shape of the lens objective and the lens barrel. Preferably, the electromagnetic waveguide filter is cylindrical. In applications, the one or more lenses are round, rounded and/or elliptic rendering the lens objective having a typical tube-shape. The tube-shaped electromagnetic waveguide filter matches the form of typical lens objective and allows, due to its simple geometry, a detailed analysis of potentially attenuated electromagnetic modes of the electrical waves allowing a specific design according to shield electromagnetic radiation according to the specific application. In particular, the inner diameter of the waveguide filter preferably closely matches the outer diameter of the lens objective, for example within 3% or less.

In a preferred embodiment, the electromagnetic waveguide filter is made of metal, in particular aluminum, to ensure a proper function and cost-effective production. Aluminum is particularly lightweight and cost-effective. However any electrically conductive material could be used, depending on the manufacturing process, and cost and weight constraints.

In a preferred embodiment, the electromagnetic waveguide filter is made of an electrically non-conductive material and its surface is at least partly coated by an electrically conductive material. The electrically non-conductive material is preferably plastic. The conductive coating of the surface could be any conductive material, preferably metal, more preferably aluminum.

Preferably, the electromagnetic waveguide filter is at least partly made of metal particles in an electrically non-conductive matrix. The electrically non-conductive matrix is preferably made of plastic and is adapted to support a plurality of metal particles in order to ensure electromagnetic shielding.

Advantageously, the electromagnetic waveguide filter is integrated in the camera housing to provide a cost-effective one part housing - waveguide filter combination which can receive the lens objective. In particular, the electromagnetic waveguide filter and the camera housing are made of the same material as one piece.

Preferably, the electromagnetic waveguide filter is attached to the lens objective at the outside thereof to allow the installation of the electromagnetic waveguide filter subsequent to the manufacturing of the lens objective. The attachment is preferably electrically conductive to ensure EMC approval.

In a preferred embodiment, the electromagnetic waveguide filter is adapted to lower the surface power density that is emitted by the sensor and/or the electronic components to less than 1 pV/m in a distance of 15 cm from the sensor and/or from the electronic components, to ensure that other electrical devices outside and nearby the camera module are not influenced by the electromagnetic radiation leaving the camera module.

According to the invention, the electromagnetic waveguide filter has a length L and a diameter d and the ratio of length L and diameter d is larger than two in order to ensure that a proper high pass electromagnetic waveguide filter is formed. The high pass electromagnetic waveguide filter has a typical cutoff frequency below which no transmission of electric magnetic waves can take place.

In a preferred embodiment, the electromagnetic waveguide filter is adapted to form a high pass filter with a cut-off frequency of at most 10 GHz, preferably at most 5 GHz, more preferably of 1.5 GHz in order to effectively shield electromagnetic radiation in an undesired frequency range within the motor vehicle. A typical undesired or noise frequency range within a motor vehicle is 27 MHz to 1.5 GHz.

In the following the invention shall be illustrated on the basis of preferred embodiments with reference to the accompanying drawings, wherein:
- Fig. 1: shows a schematic of a camera module according to the prior art;
- Fig. 2: shows a schematic of a camera module according to the invention; and
- Fig. 3: shows a schematic cross-sectional view of a lens objective.

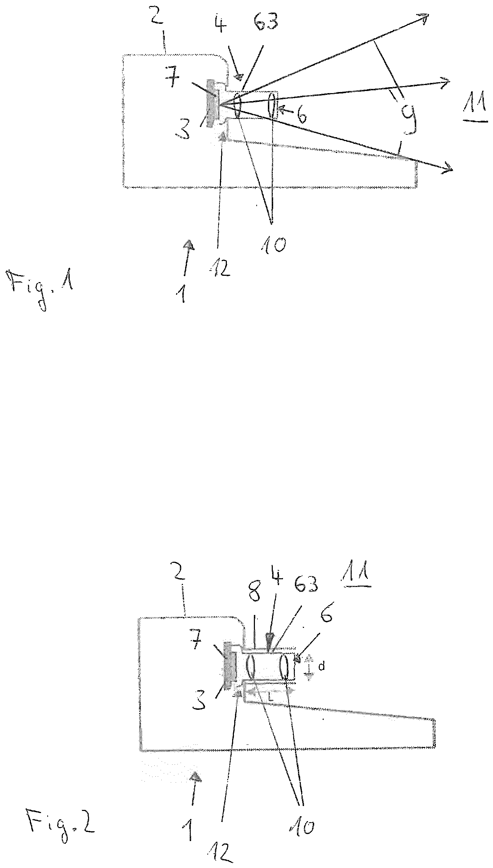

A camera module 1 according to the state of the art is shown in Figure 1. The camera module 1 according to prior art comprises a housing 2, a printed circuit board 3, and a lens objective 4 with a plastic lens barrel 63 and for example two lenses 10. The lens barrel 63 and/or the lens objective 4 is adapted to hold the two lenses 10. The lens barrel 63 and/or the lens objective 4 comprises an opening 6 allowing light to enter the camera module 1. The printed circuit board 3 comprises one or more electronic components including an image sensor 7 adapted to sense light which is transmitted through the one or more optical lenses 10 towards the image sensor 7. The housing 2 comprises a through-hole 12 through which light enters the camera module 1 via the lens objective 4.

The camera module 1 is preferably a fixed focus camera module, where the lens objective 4 is a fixed focus objective 4 having a fixed focus length which cannot be changed, and the lens objective 4 does not have movable parts for changing the focus length.

Electromagnetic radiation 9 can enter the camera module 1 through the lens objective 4 and the plastic barrel 63 and/or the lens objective 4 and potentially disturb the at least one sensor 7 and/or other electrical components on the printed circuit board 3. Also electromagnetic radiation 9 can leave the camera module 1 through the plastic barrel 63 of the lens objective 4 and disturb electronic devices nearby the camera module 1 in its surrounding 11. When a plastic housing 2 is used, electromagnetic radiation can also pass through the housing 2.

Figure 2 shows the camera module 1 according to the invention. In addition to the camera module of figure 1, the camera module 1 comprises a electromagnetic waveguide filter 8 arranged around at least a portion of the lens barrel 63 and/or the lens objective 4. The electromagnetic waveguide filter 8 electromagnetically shields the one or more electronic components including the image sensor 7 from undesired electromagnetic radiation entering the camera housing 2 and/or shields the camera surrounding 11 from undesired electromagnetic radiation leaving the camera housing 2. This makes the main housing 2 having a electromagnetic waveguide filter function in front of the image sensor 7 so that an effective electromagnetic compatibility is ensured.

The image sensor 7 detects incident electromagnetic radiation, preferably visible light and/or other optical radiation, and converts the incident light into electric current leading to an image signal that preferably can be processed by processing devices in the vehicle. The image sensor 7 is preferably a semi-conductor charge-coupled device (CCD), complementary metal-oxide-semiconductor (CMOS), or N-type metal-oxide-semi-conductor (NMOS, Live MOS). Preferably, the image sensor 7 is a color sensor adapted to sense color images from the surrounding 11.

The electromagnetic waveguide filter 8 is preferably integrated with the housing 2 and thereby an electrically conductive connection between the electromagnetic waveguide filter 8 and the housing 2 is provided. The housing 2 and/or the electromagnetic waveguide filter 8 are preferably made of aluminum but any electrically conductive material can be used. Also a non-metallic housing 2, e.g., a plastic housing 2, is possible and electrical shielding can be achieved by for example a metal coating, metal particles in non-conductive matrix, and/or other forms of suitable electromagnetic shields. Such a metal coating, metal particles in non-conductive matrix, and/or other forms of suitable electromagnetic shields can also be used for the electromagnetic waveguide filter 8.

The lens objective 4 can be constructed and manufactured to comprise the electromagnetic waveguide filter 8 to ensure a cost-effective one-part construction. The wave guide filter 8 can cover the outer face of the lens barrel 63 and/or lens objective 4 can be arranged within the lens barrel 63 and/or the objective 4. In another embodiment which is not shown, the waveguide for the 8 can be attached to the housing 2 at a later stage, for example after the lens objective 4 is mounted to the housing 2.

The inner diameter of the electromagnetic waveguide filter 8 is adapted to match the outer diameter of the lens objective 4 and/or the lens barrel 63. Matching said diameters means that the diameter of the waveguide filter 8 is larger than the diameter of the lens objective 4 and/or the lens barrel 63 in order to allow mounting subsequent to manufacturing waveguide filter 8 and the lens objective 4 and/or the lens barrel 63.

In a preferred embodiment, the length of waveguide filter 8 equals the length of the lens objective 4. According to the invention, the length of waveguide filter 8 equals the length of the lens barrel 63 to form a reliable waveguide filter 8.

In a preferred embodiment, the electromagnetic waveguide filter 8 has the shape of a cylindrical tube which will act as a waveguide. In this embodiment, the electromagnetic waveguide filter 8 has a length L and a diameter d as shown in Figure 2. The geometry and in particular the ratio of length and diameter L/d is crucial for the filter function of the electromagnetic waveguide filter 8. Surprisingly a ratio of L/d > 2 forms the electromagnetic waveguide filter 8 with high pass filter functionality and cutoff frequency of approximately 10 GHz which is well below the typical problem range in the vehicle of 27 MHz to 1.5 GHz. The signal amplitudes of the electric magnetic radiation is lowered from approximately 1 V/m inside the housing 2 to the order of magnitude of 1 µV/m in a distance of 15 cm measured from the sensor 7 in order to not disturb radio antennas nearby.

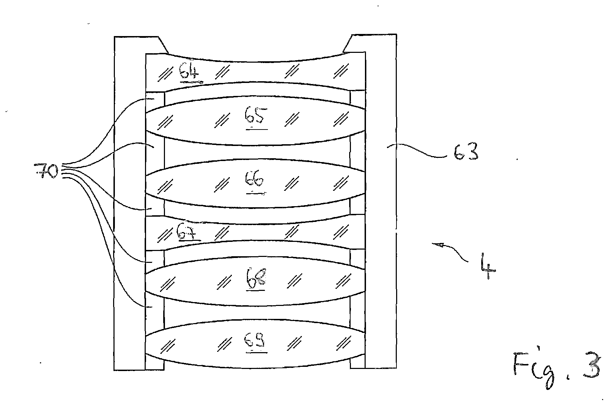

With respect to Figure 3, the lens objective 4 comprises a lens barrel 63 and one or more lenses 64 to 69 held inside the lens barrel 63 and spaced from each other using ring shaped spacers 70. Each of the lenses 64 to 69 can have a spherical or an aspherical shape.

In particular, the lens objective 4 may comprise lenses 64 to 69 made of different materials, for example glass and plastics. In the embodiment of Figure 3, for example, the lenses 65 and 69 may be made of plastics and the other lenses 64, 66, 68 may be made of glass. Furthermore, the lenses 64 to 69 may comprise positive lenses 65, 66, 68, 69 and negative lenses 64, 67. Also, the dimensions and arrangement of the lenses 64 to 69 and the lens spacers 70 can be varied and specifically designed. For example, some lenses may be in touch condition without the use of lens spacers 70.

## Claims

1. A camera module (1) for a motor vehicle, comprising
- a camera housing (2),
- a lens objective (4) comprises an opening (6) allowing light to enter the camera module (1), and
- one or more electronic components including an image sensor (7) adapted to sense light which is transmitted through the lens objective (4) towards the image sensor (7),
- an electromagnetic waveguide filter (8) is arranged around at least a portion of the lens objective (4), wherein the electromagnetic waveguide filter (8) is adapted to electromagnetically shield the one or more electronic components from undesired electromagnetic radiation entering the camera housing (2) and/or to shield the camera surrounding (11) from undesired electromagnetic radiation leaving the camera housing (2), wherein
- the lens objective (4) comprises a lens barrel (63) holding a plurality of lenses (65-69) and made of a non-shielding plastic material,
- the electromagnetic waveguide filter (8) is arranged around the lens barrel (63),
- the electromagnetic waveguide filter (8) is tube-shaped to match the tube-shape of the lens barrel (63),
- the inner diameter of the waveguide filter (8) is larger than the outer diameter of the lens barrel (63), wherein
- the electromagnetic waveguide filter (8) has a length L and a diameter d, **characterized in that**
- the ratio of length L and diameter d of the electromagnetic waveguide filter (8) is larger than two, and
- the length of the electromagnetic waveguide filter (8) equals the length of the lens barrel (63).

2. The camera module according to claim 1, **characterized in that**
- the electromagnetic waveguide filter (8) is made of a metal, in particular aluminum.

3. The camera module according to any one of the preceding claims, **characterized in that**
- the electromagnetic waveguide filter (8) is made of an electrically non-conductive material and its surface is at least partly coated by an electrically conductive material.

4. The camera module according to any one of the preceding claims, **characterized in that**
- the electromagnetic waveguide filter (8) is at least partly made of metal particles in an electrically non-conductive matrix.

5. The camera module according to any one of the preceding claims, **characterized in that**
- the electromagnetic waveguide filter (8) is integrated in the camera housing (2).

6. The camera module according to any one of the preceding claims, **characterized in that**
- the electromagnetic waveguide filter (8) is attached to the lens objective (4) at the outside of the lens objective (4).

7. The camera module according to any one of the preceding claims, **characterized in that**
- the electromagnetic waveguide filter (8) is adapted to lower the surface power density that is emitted by the one or more electronic components to less than 1 *µ*V/m in a distance of 15 cm from the sensor (7) and/or from the electronic components.

8. The camera module according to any one of the preceding claims, **characterized in that**
- the electromagnetic waveguide filter (8) forms a high pass filter with a cut-off frequency of at most 10 GHz.

## Patentansprüche

1. Ein Kameramodul (1) für ein Kraftfahrzeug, umfassend
- ein Kameragehäuse (2),
- ein Linsenobjektiv (4), das eine Öffnung (6) umfasst, die den Eintritt von Licht in das Kameramodul (1) ermöglicht, und
- eine oder mehrere elektronische Komponenten, einschließlich eines Bildsensors (7), der dazu eingerichtet ist, Licht zu erfassen, das durch das Linsenobjektiv (4) zum Bildsensor (7) geleitet wird,
- ein elektromagnetischer Wellenleiterfilter (8) um mindestens einen Teil des Linsenobjektivs (4) herum angeordnet ist, wobei der elektromagnetische Wellenleiterfilter (8) dazu eingerichtet ist, die eine oder die mehreren elektronischen Komponenten vor unerwünschter, in das Kameragehäuse (2) eintretender, elektromagnetischer Strahlung elektromagnetisch abzuschirmen und/oder die Kameraumgebung (11) vor unerwünschter, das Kameragehäuse (2) verlassender, elektromagnetischer Strahlung abzuschirmen, wobei
- das Linsenobjektiv (4) einen Linsentubus (63) umfasst, der eine Vielzahl von Linsen (65-69) hält und aus einem nicht abschirmenden Kunststoffmaterial besteht,
- der elektromagnetische Wellenleiterfilter (8) um den Linsentubus (63) herum angeordnet ist,
- der elektromagnetische Wellenleiterfilter (8) ist röhrenförmig, um der Röhrenform des Linsentubus (63) zu entsprechen,
- der Innendurchmesser des Wellenleiterfilters (8) größer ist als der Außendurchmesser des Linsentubus (63), wobei
- der elektromagnetische Wellenleiterfilter (8) eine Länge L und einen Durchmesser d aufweist, **dadurch gekennzeichnet, dass**
- das Verhältnis von Länge L und Durchmesser d des elektromagnetischen Wellenleiterfilters (8) größer als zwei ist, und
- die Länge des elektromagnetischen Wellenleiterfilters (8) gleich der Länge des Linsentubus (63) ist.

2. Das Kameramodul nach Anspruch 1, **dadurch gekennzeichnet, dass**
- der elektromagnetische Wellenleiterfilter (8) aus einem Metall, insbesondere Aluminium, hergestellt ist.

3. Das Kameramodul nach einem der vorangehenden Ansprüche, **dadurch gekennzeichnet, dass**
- der elektromagnetische Wellenleiterfilter (8) aus einem elektrisch nicht leitenden Material besteht und seine Oberfläche zumindest teilweise mit einem elektrisch leitenden Material beschichtet ist.

4. Das Kameramodul nach einem der vorangehenden Ansprüche, **dadurch gekennzeichnet, dass**
- der elektromagnetische Wellenleiterfilter (8) zumindest teilweise aus Metallpartikeln in einer elektrisch nicht leitenden Matrix besteht.

5. Das Kameramodul nach einem der vorangehenden Ansprüche, **dadurch gekennzeichnet, dass**
- der elektromagnetische Wellenleiterfilter (8) in das Kameragehäuse (2) integriert ist.

6. Das Kameramodul nach einem der vorangehenden Ansprüche, **dadurch gekennzeichnet, dass**
- der elektromagnetische Wellenleiterfilter (8) an der Außenseite des Linsenobjektivs (4) angebracht ist.

7. Das Kameramodul nach einem der vorangehenden Ansprüche, **dadurch gekennzeichnet, dass**
- der elektromagnetische Wellenleiterfilter (8) dazu eingerichtet ist, die von dem einen oder den mehreren elektronischen Bauteilen emittierte Oberflächenleistungsdichte auf weniger als 1 µV/m in einem Abstand von 15 cm vom Sensor (7) und/oder von den elektronischen Bauteilen zu senken.

8. Das Kameramodul nach einem der vorangehenden Ansprüche, **dadurch gekennzeichnet, dass**
- der elektromagnetische Wellenleiterfilter (8) einen Hochpassfilter mit einer Grenzfrequenz von höchstens 10 GHz bildet.

## Revendications

1. Un module de caméra (1) pour véhicule à moteur, comprenant
- un boîtier de caméra (2),
- un objectif de lentille (4) comprend une ouverture (6) permettant à la lumière d'entrer dans le module de caméra (1), et
- un ou plusieurs composants électroniques comportant un capteur d'image (7) adapté à détecter la lumière qui est transmise à travers l'objectif de lentille (4) vers le capteur d'image (7),
- un filtre de guide d'ondes électromagnétiques (8) est agencé autour d'au moins une partie de l'objectif de lentille (4), dans lequel le filtre de guide d'ondes électromagnétiques (8) est adapté à protéger électromagnétiquement l'un ou plusieurs composants électroniques du rayonnement électromagnétique indésiré qui entre dans le boîtier de caméra (2) et/ou à protéger l'environnement de caméra (11) du rayonnement électromagnétique indésiré qui sort du boîtier de caméra (2), dans lequel
- l'objectif de lentille (4) comprend un barillet de lentille (63) retenant une pluralité de lentilles (65-69) et composé d'un matériau plastique non-blindé,
- le filtre de guide d'ondes électromagnétiques (8) est agencé autour du barillet de lentille (63),
- le filtre de guide d'ondes électromagnétiques (8) a la forme d'un tube pour s'ajuster à la forme de tube du barillet de lentille (63),
- le diamètre intérieur du filtre de guide d'ondes (8) est supérieur au diamètre extérieur du barillet de lentille (63), dans lequel
- le filtre de guide d'ondes électromagnétiques (8) a une longueur L et un diamètre d, **caractérisé en ce que**
- le rapport de longueur L et de diamètre d du filtre de guide d'ondes électromagnétiques (8) est supérieur à deux, et
- la longueur du filtre de guide d'ondes électromagnétiques (8) est égale à la longueur du barillet de lentille (63).

2. Le module de caméra selon la revendication 1, **caractérisé en ce que**
- le filtre de guide d'ondes électromagnétiques (8) est réalisée en métal, en particulier d'aluminium.

3. Le module de caméra selon l'une quelconque des revendications précédentes, **caractérisé en ce que**
- le filtre de guide d'ondes électromagnétiques (8) est réalisée en un matériau électriquement non-conducteur et sa surface est au moins partiellement revêtue d'un matériau électriquement conducteur.

4. Le module de caméra selon l'une quelconque des revendications précédentes, **caractérisé en ce que**
- le filtre de guide d'ondes électromagnétiques (8) est au moins partiellement réalisée en particules métalliques dans une matrice électriquement non-conductrice.

5. Le module de caméra selon l'une quelconque des revendications précédentes, **caractérisé en ce que**
- le filtre de guide d'ondes électromagnétiques (8) est intégré dans le boîtier de caméra (2).

6. Le module de caméra selon l'une quelconque des revendications précédentes, **caractérisé en ce que**
- le filtre de guide d'ondes électromagnétiques (8) est fixé à l'objectif de lentille (4) à l'extérieur de l'objectif de lentille (4).

7. Le module de caméra selon l'une quelconque des revendications précédentes, **caractérisé en ce que**
- le filtre de guide d'ondes électromagnétiques (8) est adapté à abaisser la densité de puissance surfacique qui est émise par l'un ou plusieurs composants électroniques à moins de 1 µV/m à une distance de 15 cm du capteur (7) et/ou des composants électroniques.

8. Le module de caméra selon l'une quelconque des revendications précédentes, **caractérisé en ce que**
- le filtre de guide d'ondes électromagnétiques (8) forme un filtre passe-haut avec une fréquence de coupure d'au plus 10 GHz.
